# EUROPEAN PATENT APPLICATION

(11) **EP 4 357 182 A1**
(43) Date of publication of application: **24.04.2024**
(21) Application number: 23204988.2
(22) Date of filing: 20.10.2023
(51) Int. Cl.: B60K 6/387, B60K 6/442, B60K 6/547, B60K 1/00, B60K 7/00, B60W 10/02, B60W 10/06, B60W 10/08, B60W 10/26, B60W 20/13, B60W 20/40, B60W 30/02, B60W 30/18, B60W 30/182, B60W 30/184, B60W 30/186, B60W 50/08, B60W 50/10, F16H 59/02, B60W 50/00, B60K 6/46

(54) **IMPROVED HYBRID ARCHITECTURE FOR MANAGING AN INCHING OPERATION AND RELATED INCHING CONTROL METHOD**

(30) Priority: 21.10.2022 IT 202200021765
(71) Applicant: CNH Industrial Italia S.p.A., 10156 Torino (IT)
(72) Inventor: MESCIA, Claudio, 10156 Turin (IT); BORGHI, Alberto, 10156 Turin (IT); MANTOVANI, Michele, 10156 Turin (IT); DELL'AVERSANA, Raffaele Edoardo, 10156 Turin (IT); INVERSANI, Alessio, 10156 Turin (IT)
(74) Representative: CNH Industrial IP Department

(57) **Abstract**

Work vehicle comprising a hybrid architecture (1) for providing torque to at least one axle assembly (20) of said work vehicle, a mechanical power source (2) for providing torque to an engine shaft (3), a transmission module (4) operatively interposed between said engine shaft (3) and an output shaft (5), wherein said output shaft (5) is connected to the at least one axle assembly (20), an electric power management module (6) comprising a first electric machine (7), at least a second electric machine 18) and accumulator means (9), and an electronic control unit (1) comprising elaboration means configured to acquire data from mechanical power source (2), electric power management module (6), elaborate this latter and control the mechanical power source (2) and the electric power management module (15) to execute an inching functionality by providing torque towards the axle assembly (20) according to a request signal.

## Description

### TECHNICAL FIELD

The present invention concerns a hybrid architecture for a work vehicle, in particular a hybrid architecture for managing a inching operation of the work vehicle.

The present invention finds its preferred, although not exclusive, application in agricultural vehicles such as tractors. Reference will be made to this application by way of example below.

### BACKGROUND OF THE INVENTION

Work vehicle such as agricultural vehicle are usually provided with an inching functionality.

The inching functionality is well known functionality provided in work vehicles that provide a very slow movement of the vehicle on ground. This may be useful at kick-off of the vehicle or for adjusting the position of the vehicle to allow mounting of implements.

Such inching functionality may be controlled by the driver when seated on vehicle cab or by outside of the vehicle via dedicated actuation means realized on the vehicle body or by remote via telecommunication systems.

The inching functionality is achieved by modulating the torque provided by the engine against a braking torque provided by parking brake.

Such torque modulation lead to jerks and therefore clearly decreases the comfort of the user. Moreover, such jerks due to torque modulation increases the wear of the mechanical elements used for achieving the modulation, thereby increasing maintenance costs.

A solution to the above drawbacks is using so-called CVT inching systems that however are bulky and costly.

In view of the above, the need is felt to provide a system for achieving an inching functionality in a work vehicle that provide a smooth and comfortable inching functionality while being cost-effective and compact.

An aim of the present invention is to satisfy the above mentioned needs in a cost-effective and optimized manner.

### SUMMARY OF THE INVENTION

The aforementioned aim is reached by a hybrid architecture and a related inching control method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a hybrid architecture according to the invention; and

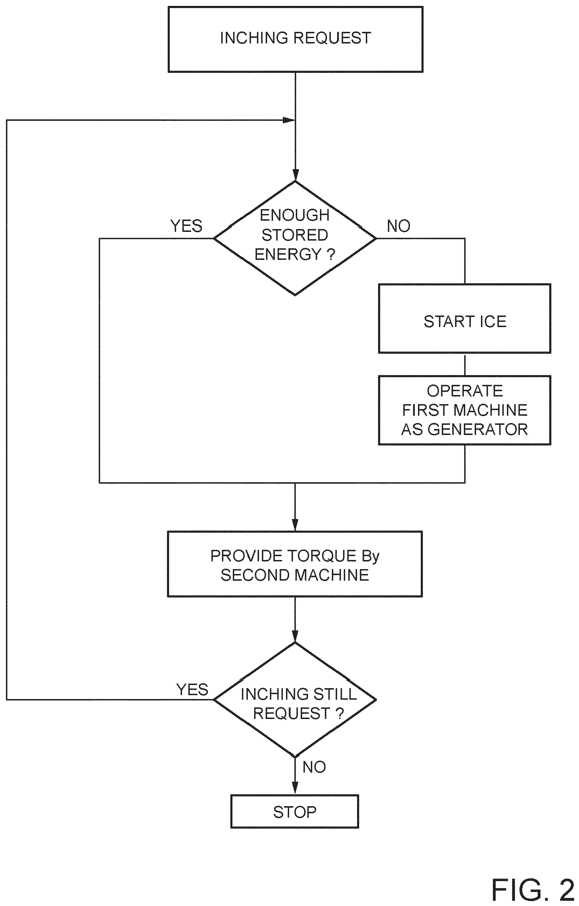

- Figure 2 is a flowchart disclosing a inching control method according to the invention.

### DETAILED DESCRIPTION OF THE INVENTION

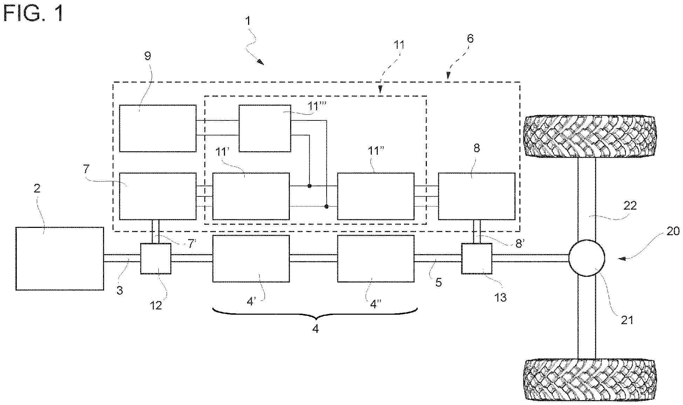

Figure 1 shows a hybrid arrangement for a work vehicle such as an agricultural vehicle, e.g. a tractor.

Hybrid arrangement 1 comprises a mechanical torque source 2 such as an internal combustion engine configured to provide a mechanical torque to an engine shaft 3. In the following the mechanical torque source will be referred for brevity as ICE, internal combustion engine.

The engine shaft 3 is mechanically connectable to a transmission module 4 configured to vary the torque/speed provide by the engine shaft 3 to an output shaft 5.

In detail, the transmission module 4 as shown comprises a gear-shift module 4' and a range-shift module 4'' that are mechanically connected in series one with the other.

In particular the engine shaft 3 is connectable to transmission module 4 via coupling means (not shown) such as clutches. Similarly, the output shaft 5 is connectable to transmission module 4 via coupling means (not shown) such as clutches

The hybrid arrangement 1 further comprises an electric power management module 6. The electric power management module 6 advantageously comprises a first electric machine 7, usually configured to act as a generator, a second electric machine 8, usually configured to act as an electric motor, accumulator means 9 configured to store electrical power and a power distribution module 11 configured to manage current flow among first electric machine 7, second electric machine 8 and accumulator means 9.

For instance, the power distribution module 11 according to the disclosed embodiment comprises a generator inverter 11', a motor inverter 11", and a DC/DC converter 11‴.

Preferably, the accumulator means 9 may comprise a supercapacitor or battery means.

The first electric machine 7 is mechanically connected to engine shaft 3 via a connection module 12, e.g. a gearing, and similarly the second electric machine 8 is mechanically connected to the output shaft 5 via a via a connection module 13, e.g. a gearing.

The output shaft 5 is mechanically coupled to a front axle assembly 20 of the vehicle. For instance the output shaft 5 is mechanically connected to a front axle 22 of the front axle assembly 20 via a gearbox 21 such as a differential.

In a non-disclosed embodiment, the second electric machine 8 may be directly provided at axle 22 or to its wheels and therefore be more than one as exemplarily disclosed.

The vehicle may further comprise input means, e.g. buttons or display icons, realized in vehicle cab and/or on a vehicular wall of the body outside the cab and/or in a remote portable controller and configured to receive an input to start or stop the inching functionality in a specific direction, forward or rearward, of the vehicle.

The vehicle further comprises an electronic control unit (not shown) configured to receive data by ICE 2, by transmission module 4 and by electric power management module 6 to elaborate such acquired data and control ICE 2 and the electric power management module 6 to execute an inching functionality. In detail, such inching functionality is executed by controlling the power management module 6 to provide a torque directly to front axle assembly 20 bypassing transmission module 4.

In particular, the electronic control unit is configured to detect the status of energy accumulated in accumulator means 9 and control the operation of ICE 2 in function of such energy status.

The electronic control unit may be furthermore configured to start an inching functionality in peculiar operative conditions of the work vehicle, for instance at kick-off to allow a smooth movement at start of the driving the vehicle.

The operation of the embodiment of the invention as described above is the following.

When requested by the driver or imparted by the electronic control unit, the inching functionality is started.

According to the charging status of the accumulator means 9 the ICE 2 is active or inactive to provide torque to the first electric machine 7 that acts as generator.

Irrespective of the above activation of the ICE 2 and of the first electric machine 7, the second electric machine 8 is controlled to provide torque at output shaft 5 thereby providing torque at axle 21 and leading the work vehicle move forward or rearward according to rotational direction imparted by second electric machine 8.

Clearly, the electrical power converted into mechanical power by second electric machine 8 is supported by accumulator means 9 if sufficient energy is stored therein or provided by first electric machine 7 carried by ICE 2.

In such case, the transmission module 4 is mechanically decoupler by engine shaft 3 and therefore all the mechanical power provided by ICE is used by first electric machine 7.-The aforementioned operations are carried out till the inching functionality request is needed by the driver or by electric control unit.

In case of operation of inching functionality at kick-off of the vehicle, then the control unit may control coupling means to connect transmission module 4 to engine shaft 3 thereby leading to a purely mechanical/hybrid driving according to the need of the vehicle in function of the activation of the second electric machine 8.

In view of the above, the present invention further relates to an inching control method comprising the following steps:
- i) receiving a request for activating inching functionality;
- ii) detecting state of charge of accumulator means, if the state of charge is above a predetermined threshold proceed with step v) otherwise if the state of charge is below a predetermined threshold proceed with step iii) ;
- iii) control ICE to provide torque to engine shaft;
- iv) control the first electric machine to operate as generator using the torque provided at engine shaft;
- v) control the second electric machine to provide torque towards front axle assembly;
- vi) verify if inching functionality is still request, if yes, return to step ii), otherwise stop the process.

In particular, the request may be represented by an input signal provided by input means or derived by elaboration by electronic control unit.

The predetermined threshold of the state of charge may be memorized by elaboration means of control unit. The electronic control unit may furthermore be configured to allow the variation by the driver of such threshold value, if required.

In view of the foregoing, the advantages of a hybrid arrangement and an inching control method according to the invention are apparent.

Thanks to the proposed hybrid arrangement it is possible to provide a smoot and compact arrangement that allows an inching functionality that is at the same time smooth and precise.

Indeed, the use of an electric motor directly acting on output shaft allows a fine tuning of the inching functionality and avoid the jerk due to known arrangements.

Furthermore, fuel consumption is reduced since the ICE is activated only when needed and, in case, the transmission is disconnected by the engine shaft.

It is clear that modifications can be made to the described hybrid arrangement and related inching control method which do not extend beyond the scope of protection defined by the claims.

For example the hybrid architecture may vary. For instance, the second electric machines may be provided for each wheel of the front axle instead of a single second electric machine as described.

Similarly, the electric power management module may be realized in different manner and comprise more element to manage the electrical power transfer. Moreover, as said, accumulator means may be of any typology.

## Claims

1. Work vehicle comprising a hybrid architecture (1) for providing torque to at least one axle assembly (20) of said work vehicle, said hybrid architecture (1) comprising:
- a mechanical power source (2) for providing torque to an engine shaft (3),
- a transmission module (4) operatively interposed between said engine shaft (3) and an output shaft (5) and configured to vary the torque/speed between said engine shaft (3) and an output shaft (5),
wherein said output shaft (5) is connected to said at least one axle (assembly),
- an electric power management module (6) comprising a first electric machine (7), at least a second electric machine 18) and accumulator means (9), said first electric machine (7), second electric machine (8) and accumulator means (9) being electrically connected together to exchange electrical power,
wherein said first electric machine (7) being operatively coupled to said engine shaft (3) and said second electric machine (8) being configured to exchange torque with said axle assembly (20),
said hybrid architecture (1) comprising an electronic control unit (1) comprising elaboration means configured to acquire data from said mechanical power source (2), said electric power management module (6), elaborate this latter and control said mechanical power source (2) and said electric power management module (15) to execute an inching functionality by providing torque towards said axle assembly (20) according to a request signal.

2. Work vehicle according to claim 1, wherein said mechanical power source (2) is an internal combustion engine.

3. Work vehicle according to claim 1 or 2, wherein said axle assembly (20) is a front axle assembly of said work vehicle.

4. Work vehicle according to any of claims 1 to 3, wherein said first electric machine (7) is operatively connected to said engine shaft (3) via a gearing (12).

5. Work vehicle according to any of claims 1 to 4, wherein said second electric machine (8) is operatively connected to said output shaft (5) via a gearing (13).

6. Work vehicle according to any of claims 1 to 4, wherein said second electric machine (8) are provided for each wheel of said work vehicle.

7. Work vehicle according to any of the preceding claims, wherein said request signal is elaborated by said control unit according to vehicle operation or provided by input means carried by said work vehicle or realized in a remote controller.

8. Work vehicle according to any of the preceding claims, wherein said second electric machine (8) is configured to provide torque towards said axle assembly (20) bypassing said transmission (4).

9. Work vehicle according to any of the preceding claims, wherein said transmission is selectively connectable to said input and/or output shafts (3, 5) via coupling means.

10. Method for controlling an inching functionality in a work vehicle as claimed in any of the preceding claims and comprising the following steps:
• i) receiving a request for activating inching functionality;
• ii) detecting state of charge of accumulator means, if the state of charge is above a predetermined threshold proceed with step v) otherwise if the state of charge is below a predetermined threshold proceed with step iii) ;
• iii) control ICE to provide torque to engine shaft;
• iv) control the first electric machine to operate as generator using the torque provided at engine shaft;
• v) control the second electric machine to provide torque towards front axle assembly;
• vi) verify if inching functionality is still request, if yes, return to step ii), otherwise stop the process.

11. Method according to claim 10, wherein the request of step i) may be represented by an input signal provided by input means carried by said vehicle or by a remote controller or derived by elaboration by electronic control unit.

12. Method according to claim 10 or 11, wherein said predetermined threshold of the state of charge is memorized by elaboration means of control unit.
